# EUROPEAN PATENT APPLICATION

(11) **EP 4 008 505 A1**
(43) Date of publication of application: **08.06.2022**
(21) Application number: 21211875.6
(22) Date of filing: 02.12.2021
(51) Int. Cl.: B26D 7/20, B26D 7/01

(54) **MACHINING APPARATUS FOR MACHINING BY MATERIAL REMOVAL**

(30) Priority: 04.12.2020 IT 202000030002
(71) Applicant: C.M.S. S.p.A., 24019 Zogno (BG) (IT)
(72) Inventor: MILESI, Danilo, 24010 Moio de' Calvi (BG) (IT); TISI, Fulvio, 24055 Cologno al Serio (BG) (IT)
(74) Representative: Villanova, Massimo

(57) **Abstract**

A machining apparatus (100) is disclosed comprising a workbench (10) to support at least one article to be machined; at least one machining device (4) to perform machining on said article by removing material, the machining device (4) being movable with respect to the workbench (10), in which the workbench (10) comprises a base (7) comprising two or more plate-like elements (1) arranged vertically and spaced apart from each other, each plate-like element (1) extending in length along a horizontal longitudinal axis and including a jagged upper edge (1a, 1b, 1c); support means (5, 6) arranged on the base (7), in contact with the jagged upper edges (1a, 1b, 1c) of the plate-like elements (1), the support means (5, 6) being sacrificial, i.e. configured to undergo material removal together with the article, defining a support horizontal martyr plane for the article.

## Description

### Technical background

The invention relates to a machining apparatus, in particular a cutting apparatus, to perform machining on an article by removal of material from the article.

This machining apparatus can comprise, in particular, a machining apparatus with several axes, in which a machining device that is suitable for removing material from the article is movable along and/or around the axes to perform machining on the article. This machining device can comprise, in particular, a cutting device having a blade, a milling unit and/or a water jet cutting head arranged to cut the article.

The invention can be further used in any machining apparatus in which the article to be machined is rested on a support plane for the article, in particular on a martyr plane.

### Background of the invention

Machining apparatuses are known comprising a workbench to support the article to be machined. This workbench can comprise a horizontal martyr plane, which is arranged resting on a base, or frame, or anti-reverberation surface. In machining by material removal, the machining device exerts machining force on the article to remove the material thereof, in which the machining force is transmitted to the martyr plane on which the article is arranged, or is exerted directly on the martyr plane when the machining device is removing material from the machining plane itself. This force has a horizontal component, in particular a component parallel to a horizontal plane on which the martyr plane lies.

The horizontal component of the machining force can be significant when a blade with a rotatable disk is used, because the machining force is directly mainly according to a direction that is tangential to the disk.

The horizontal component of the machining force can on the other hand be modest when a water jet head is used, because the water jet and the machining force are directed vertically to the horizontal martyr plane. Nevertheless, as there is high jet pressure, a minor asymmetry of the jet may also in this case cause a significant horizontal component of the machining force.

The horizontal component of the machining force causes a corresponding undesired displacement of the horizontal martyr plane with respect to the base on which it is arranged. This undesired displacement can mean that the machining is performed on the article in spatial positions that are other than those expected, thus harming finished product function and increasing production waste.

In order to prevent the undesired displacement, the prior art apparatuses can lead to the martyr plane being glued to the base of the workbench. This entails a complex replacement, which detaches the martyr plane when the latter has deteriorated by machining and affixing a new one thereof; in fact, the martyr plane, being a sacrificial element, requires frequent replacement.

One drawback of the prior art apparatuses is that the martyr plane is displaced by the machining force, thus not ensuring correct machining of the finished product.

A further drawback of the prior art apparatuses is that the time for replacing the martyr plane is excessively long, resulting in lower productivity of the machining apparatus.

### Summary of the invention

One object of the invention is to improve machining apparatuses of known type.

One object of the invention is to make a machining apparatus that is able to overcome the aforesaid limits and drawbacks of the prior art.

One object of the invention is to ensure correct fixing between the martyr plane and the base.

One advantage of the invention is to permit precise positioning of the martyr plane with respect to the machining device.

One advantage of the invention is to limit or annul the corresponding displacement between the martyr plane and the base.

One advantage of the invention is to reduce waste in the production of articles to be machined.

One advantage of the invention is to increase the productivity of machining apparatuses.

One advantage of the invention is to provide a machining apparatus that is cheap and simple from the constructional and functional point of view.

Such objects and advantages, and still others, are achieved by a machining apparatus according to one or more of the claims set out below.

In one embodiment, the machining apparatus comprises a workbench to support at least one article to be machined; at least one machining device to perform machining on the article by removing material, the machining device being movable with respect to workbench, in which the workbench comprises a base comprising two or more plate-like elements arranged vertically and spaced apart from each other, each plate-like element extending in length along a horizontal longitudinal axis and including a jagged upper edge; support means arranged on the base, in contact with the jagged upper edges of the plate-like elements, the support means being sacrificial, i.e. configured to undergo material removal together with the article, defining a support horizontal martyr plane for the article.

### Short description of the drawings

The invention can be better understood and implemented with reference to the attached drawings, which illustrate an embodiment thereof by way of non-limiting example, in which:
figure 1 shows an axonometric view of a machining apparatus in which a workbench and a cutting device are indicated;
figure 2 shows an axonometric view of the workbench of figure 1 in which the support means is shown, in particular plate supports;
figure 3 shows a detail of figure 2 in which plate-like elements are shown of the workbench and in which further plate-like elements and fixing means are connected to the plate-like elements;
figure 4 shows a detail of figure 2 in which the further plate-like elements and the fixing means are disconnected from the plate-like elements;
figure 4a shows an enlargement of figure 2 in which a side face of the plate support is placed alongside a jagged upper edge of the further plate-like element;
figure 5 shows a section of the workbench of figure 2 along a longitudinal plane XZ; figure 6 shows an axonometric view of the fixing means in which a base body and a pointed element are shown;
figure 7 shows a partial axonometric view of a plate-like element in which a jagged upper edge is indicated;
figure 8 shows an axonometric view of the further plate-like element;
figure 9 shows an axonometric view of the workbench in which support means is shown, in particular elongated supports;
figure 10 shows an enlargement of the workbench of figure 9 in which the elongated supports are disconnected from the plate-like elements;
figure 11 shows a detail of the workbench of figure 9 in which the elongated supports are connected to the plate-like elements;
figure 12 shows a section of the workbench of figure 9 along a longitudinal plane XZ;

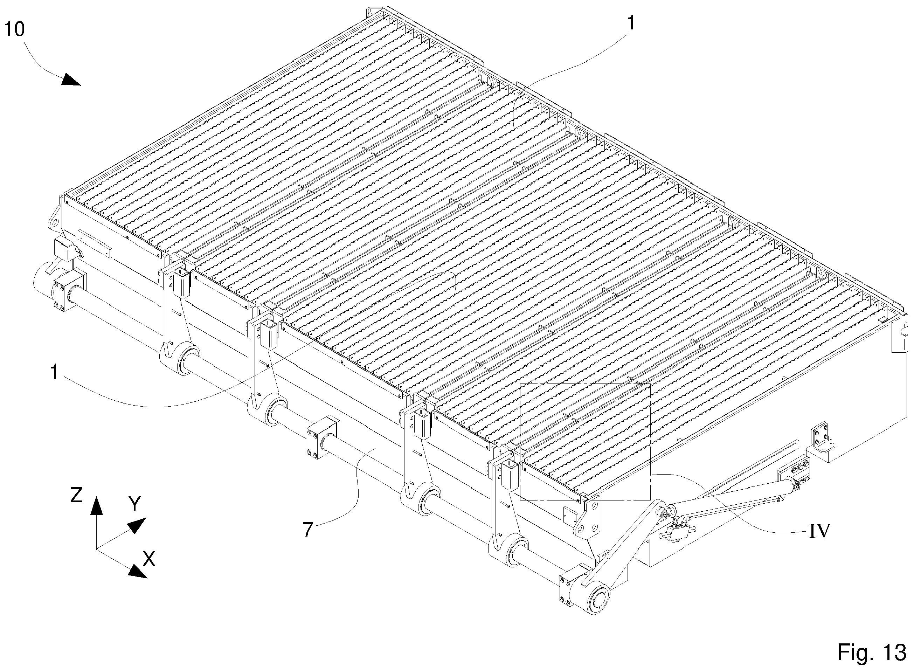

figure 13 shows the workbench without the support means;

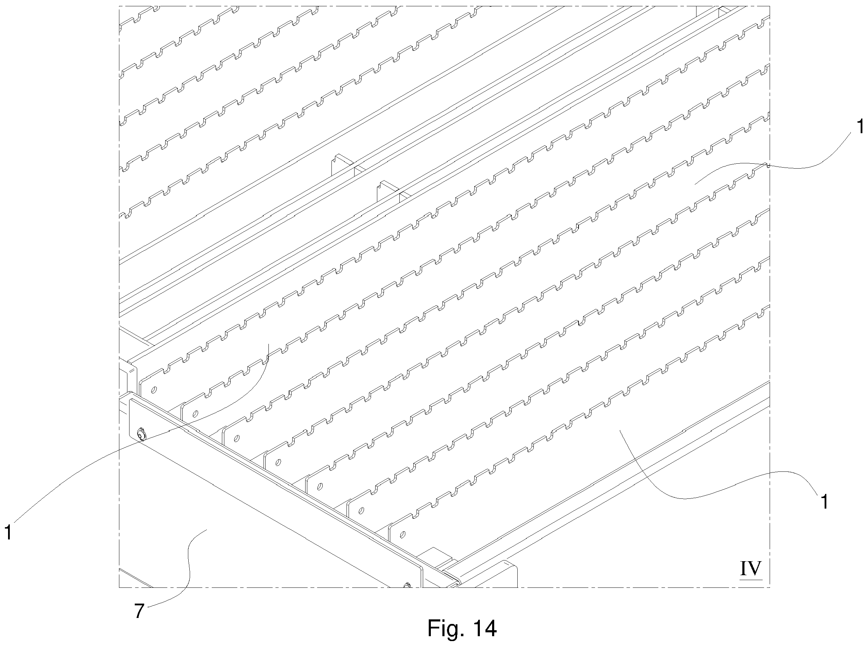

figure 14 shows a detail of figure 13 in which the plate-like elements are indicated;

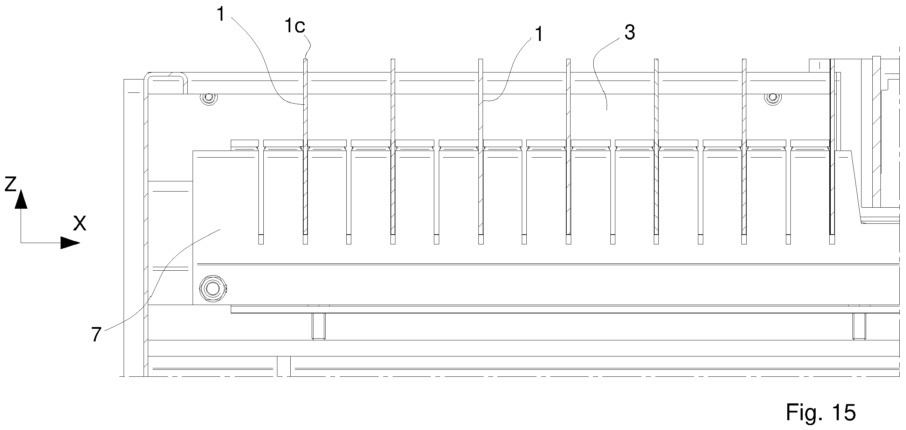

figure 15 shows a section of the workbench of figure 13 along a longitudinal plane XZ.

### Detailed description

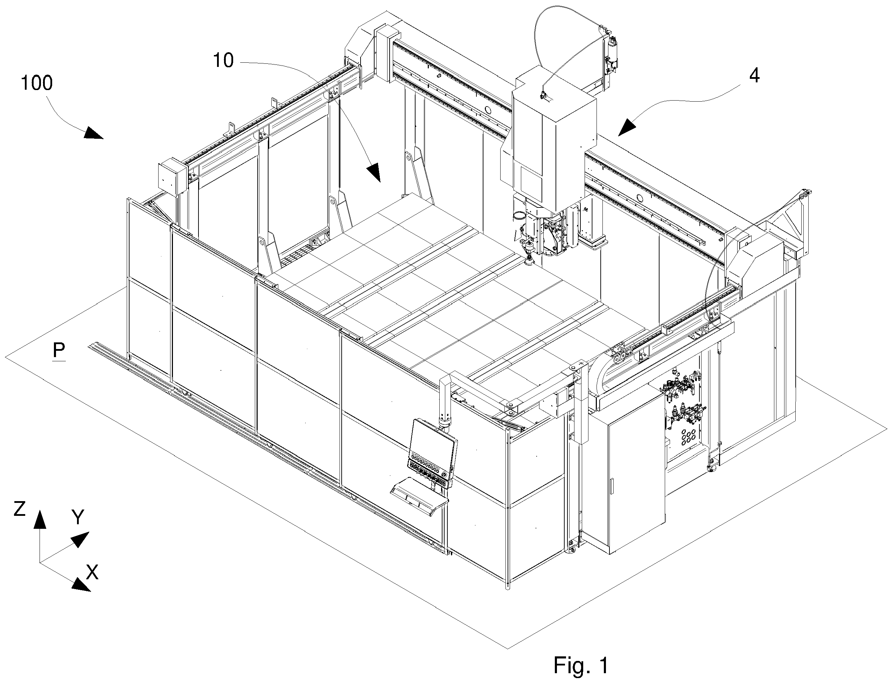

With reference to figure 1, a machining apparatus 100 is disclosed, in particular a cutting apparatus, arranged to perform machining on an article, in particular machining by material removal.

This machining apparatus 100 comprises, in particular, a workbench 10 suitable for supporting the article to be machined and maintaining the article in a set position, such that the article can undergo material removal, for example a cut, hole or incision, in one or more preset zones of the article.

With reference to figures 1, 2 and 9, the workbench 10 comprises, in particular, a base, or frame 7, which can be fixed with respect to a base plane P of the machining apparatus 100, like for example an industrial floor. This base 7 can comprise, in particular, a plurality of structural elements and is arranged for supporting support means 5, 6 which define a horizontal martyr plane suitable for supporting the article to be machined, i.e. a sacrificial support configured to undergo material removal together with the article. The base 7 can have an elongated, in particular rectangular, plan shape.

The machining apparatus 100 can comprise, in particular, at least one machining device 4 arranged to perform machining on the article, in particular machining by material removal, like cutting and/or drilling operations. In other words, the machining device 4 comprises a cutting device suitable for cutting said article, the cutting device comprising a rotatable disc blade for cutting said article and/or a water jet cutting head configured to project a pressurized water flowrate towards the workbench 10 to cut the article.

The machining device 4 is movable with respect to the workbench 10 so as to approach and interact with the article to be machined.

The machining device 4 can be movable along three directions in the space defined by a vertical axis Z, a horizontal axis X, and a further horizontal axis Y that are orthogonal to one another.

The machining apparatus 100 can comprise, in particular, a five-axis machining apparatus, in fact in addition to the aforesaid directions, the machining device 4 can rotate around one or more axes (not shown) to orient opportunely the blade head and/or the water jet head with respect to the workbench 10 so as to interact with the article according to different tilts.

The machining device 4 can comprise, in particular, a cutting device suitable for cutting the article to be machined, like a disc blade provided with a cutting peripheral edge, for example a notched edge, which is rotatable to cut the article. In cutting operations, the cutting device is brought up to the workbench 10 (and to the article to be cut) along a machining line that can be vertical or tilted by a desired angle with respect to the vertical axis Z of the machining apparatus 100, the blade is subsequently brought into contact with the article, exerting on the article - and on the martyr plane on which the article is rested-a machining force that is such as to remove the material of the article. In addition or alternatively, the cutting device can comprise, in particular, a water jet cutting head configured to project to the workbench a flowrate of pressurized water at a machining force that is such as to cut the article. The machining force that the machining device 4 exerts on the article and on the support means 5, 6 has a horizontal component that tends to displace support means 5, 6 horizontally. If the machining is through-going, i.e. means cutting or drilling that traverse, in particular vertically, the article from one side to the other, the machining device 4 can also remove material from the support means 5, 6 on which the article to be cut is arranged.

With reference to figure 1, the machining device 4 is provided with both the disk blade and the water jet cutting head.

In a further embodiment that is not illustrated, the machining device 4 can comprise, in particular, a machining tool, like a milling unit, a drill, an alternating blade, etc.

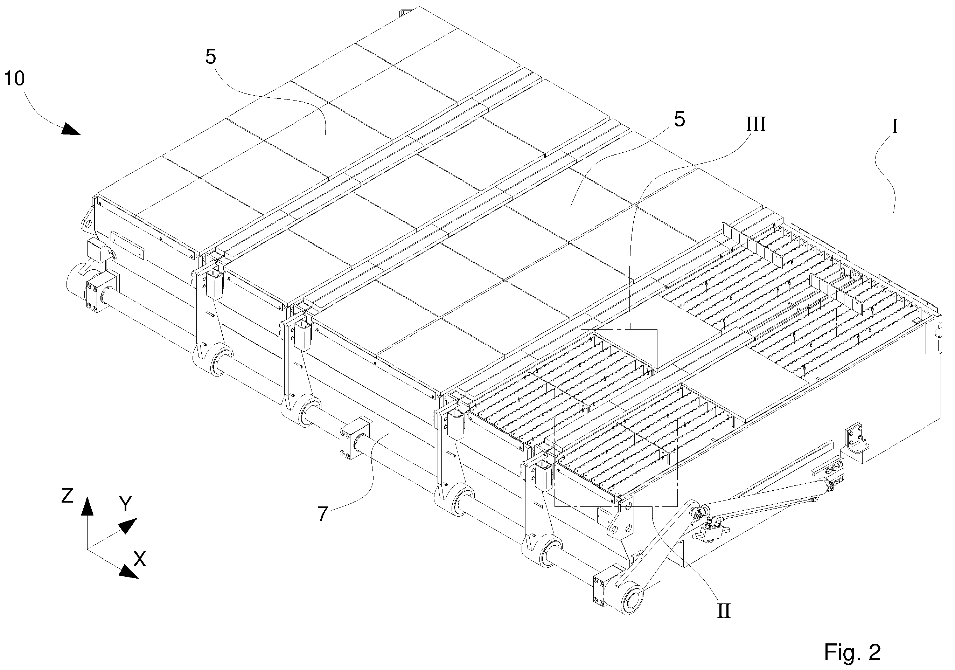

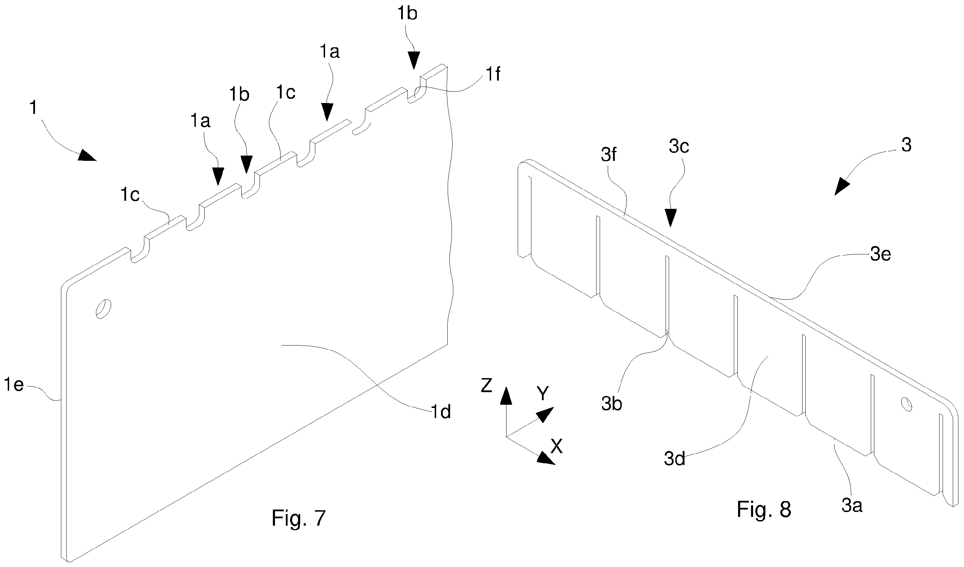

With reference to figures 1, 2 and 9, the base 7 can comprise, in particular, two or more plate-like elements, or lamina elements 1 arranged vertically and spaced apart from one another. With reference particularly to figure 7, each plate-like element 1 is shaped in particular as a plate or lamina, has an elongated plan shape, in particular rectangular, rises vertically in height according to a direction that is parallel to the vertical axis Z, extends in length along a horizontal longitudinal axis and has a transverse thickness that is significantly less than the length and the height. In the specific embodiment shown for example in figure 2, this horizontal longitudinal axis is parallel to the further horizontal axis Y of the machining apparatus 100.

In the specific embodiment shown in the figures, the plate-like elements 1 are arranged vertically, according to a direction parallel to the vertical axis Z, and spaced apart from one another along a direction parallel to the horizontal axis X, thus forming a grid configuration.

In a further embodiment that is not illustrated, the plate-like elements 1 can be arranged spaced along another horizontal axis, like the further horizontal axis Y of the machining apparatus 100.

In a further embodiment that is not illustrated, this horizontal longitudinal axis can be parallel to a further horizontal axis, for example to the further horizontal axis Y of the machining apparatus 100.

Each plate-like element 1 comprises, in particular, a jagged upper edge 1a, 1b, 1c, i.e. comprising a succession of recesses 1b and projections 1a. This jagged upper edge 1a, 1b, 1c is arranged on a peripheral portion of the plate-like element 1 and faces the support means 5, 6.

Referring in particular to figure 7, the jagged upper edge 1a, 1b, 1c comprises at least one projection 1a and a recess, or undercut, 1b that are arranged in succession and alternating with one another. This projection 1a and this recess 1b can be, in particular, contiguous to one another and arranged parallel to the horizontal longitudinal axis of the plate-like element 1.

Each jagged upper edge 1a, 1b, 1c comprises, in particular, a succession of projections 1a, in which each projection 1a is shaped, in particular, as a rectangle, with a horizontal upper side. In other words, the projection 1a has a squared section in a vertical plane passing through the horizontal longitudinal axis of the plate-like element 1. This upper side comprises, in particular, an abutment surface 1c facing the support means 5, 6 arranged to contact the support means 5, 6. The abutment surface 1c can be in particular flat horizontal. The upper sides (or equivalently the abutment surfaces 1c) of the same jagged upper edge 1a, 1b, 1c are coplanar on the same horizontal plane. In a further embodiment that is not illustrated, each projection 1a can be shaped, in particular, as a trapezium with a horizontal upper side or as a triangle.

In the grid configuration of adjacent plate-like elements 1, the upper sides (or equivalently the abutment surfaces 1c) of at least two jagged upper edges 1a, 1b, 1c are coplanar on the horizontal plane.

Each recess 1b is provided, in particular, with at least one bottom surface If, this bottom surface is arranged at a vertical height that is less than a vertical height of the abutment surface 1c.

The support means 5, 6 is arranged on the base 7, in contact with the jagged upper edges 1a, 1b, 1c. As previously mentioned, the support means 5, 6 is sacrificial, i.e. is configured to undergo material removal together with the article. In fact, the support means 5, 6 is made of a material that is penetrable by the machining device 4, in particular the support means 5, 6 can be made of an elastomeric material, like rubber.

The support means 5, 6, can be arranged removably on the plate-like elements 1 to be removed and replaced when worn with new support means 5, 6.

The horizontal martyr plane can extend along a direction parallel to the horizontal axis X and along a further direction parallel to the further horizontal axis Y. The martyr plane can have, in particular, a rectangular plan shape.

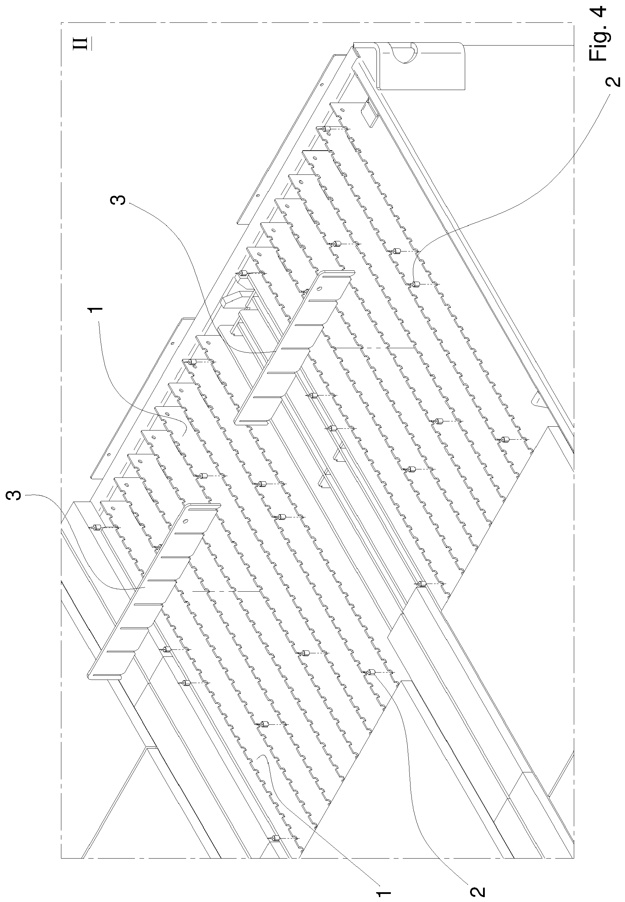

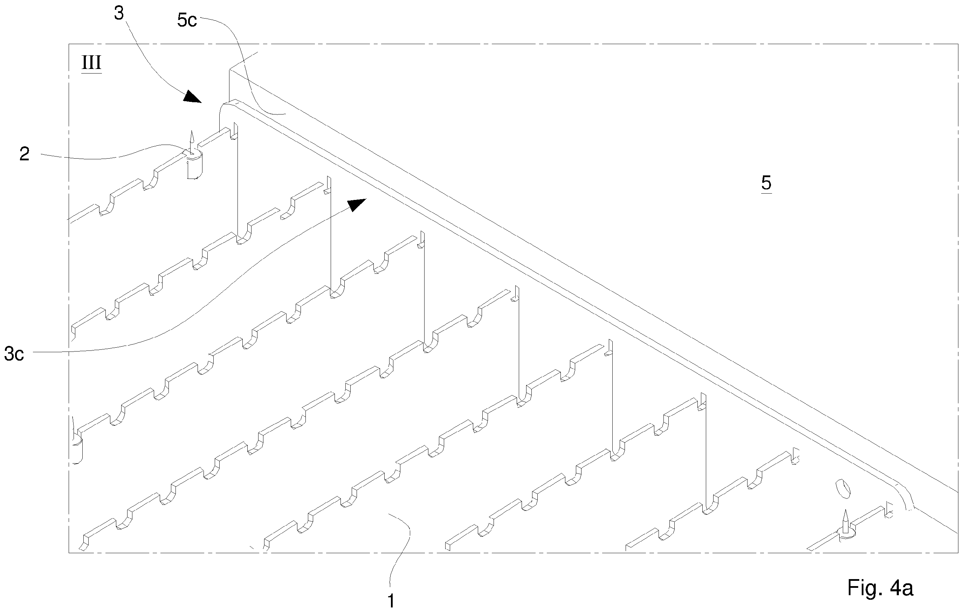

With reference to figures 1, 2, 5 and 6, the support means 5, 6 can comprise, in particular, a plate support or tile 5, i.e. having two dimensions that prevail over a thickness, and a rectangular plan shape, in particular a square plane shape. Such plate supports 5 can be arranged, in particular, alongside one another in an adjacent configuration to define the support horizontal martyr plane for the article. Such plate supports 5 can comprise, in particular, an upper face 5b arranged to receive the article in support, and a lower face 5a, opposite the upper face 5b, facing the jagged upper edges 1a, 1b, 1c. The lower face 5a and the lower face 5b can be in particular flat. With reference to figure 4a, the plate support 5 can comprise at least one side face 5c arranged on a peripheral portion of the tile 5. This side face 5c can be contiguous with the upper face 5b and with the lower face 5a. In the adjacent configuration, at least one plate support 5 has a side face 5c facing the side face 5c of the near plate support 5.

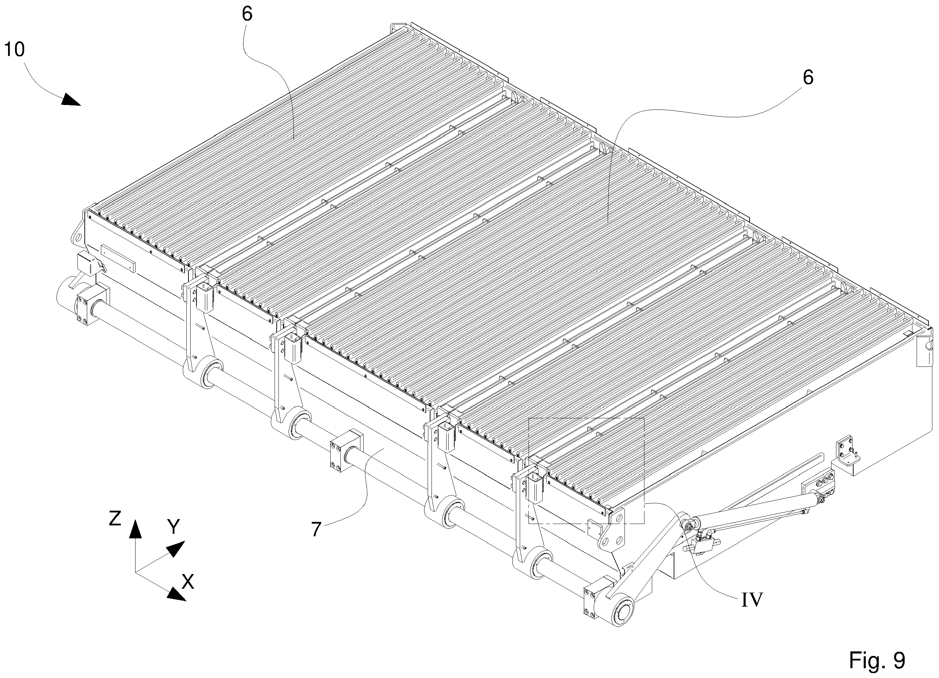

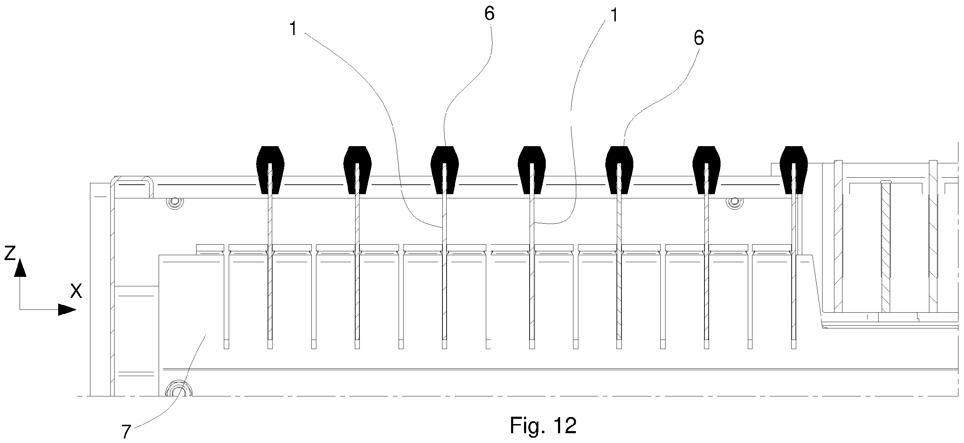

With reference to figures 9, 10, 11 and 12, the support means 5, 6 can comprise, in particular, an elongated support 6 that extends along a longitudinal axis S thereof. The elongated support 6 is provided with a "C" (or "U") section with a lower opening facing downwards that defines a longitudinal groove. The elongated support 6 comprises, in particular, an upper surface, or back, facing upwards opposite the lower opening. These elongated supports 6 can be arranged adjacent and spaced apart from one another in an aligned configuration, such that the upper surfaces can receive the article in support to be machined. In this aligned configuration, the longitudinal axis S of an elongated support 6 is parallel to the longitudinal axis S of the elongated support 6 positioned nearby. In the aligned configuration, the longitudinal axis S can be parallel to the further horizontal axis Y.

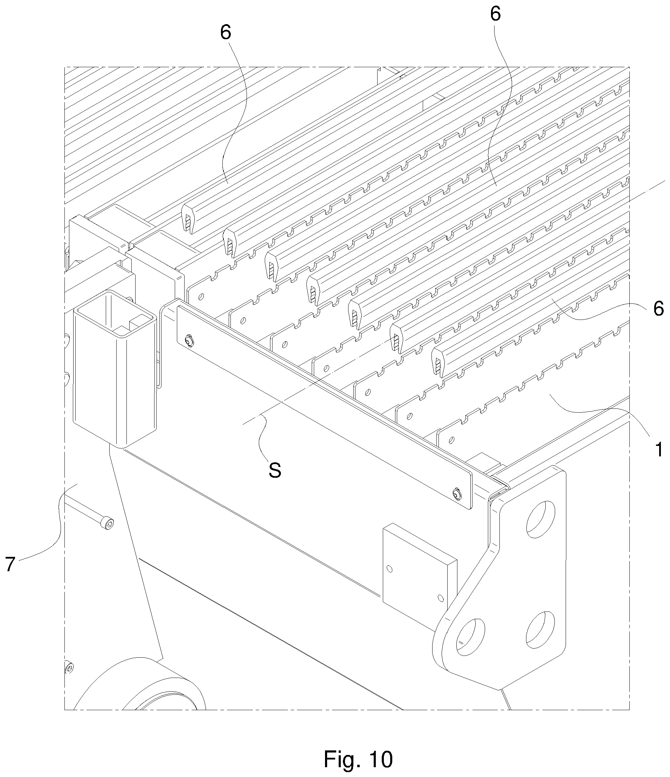

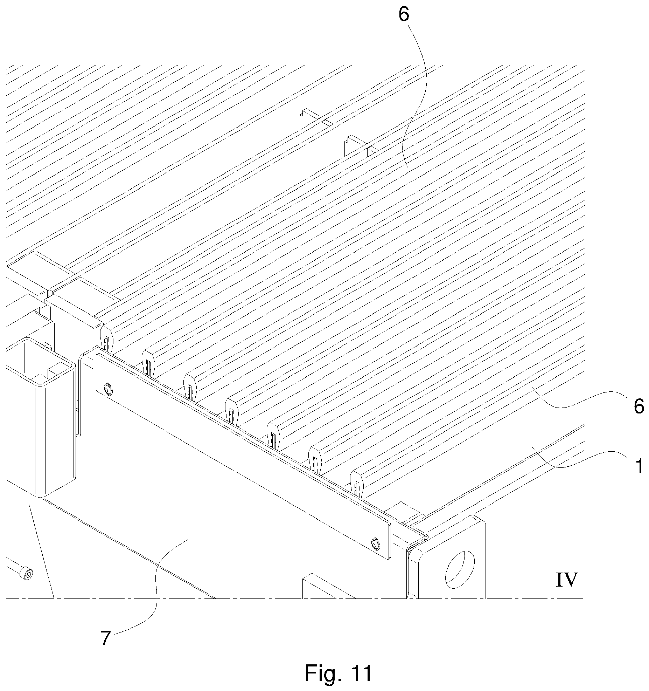

With reference to figures 10 and 11, the elongated supports 6 can be placed vertically on the jagged upper edges 1a, 1b, 1c, such that the jagged upper edge 1a, 1b, 1c is coupled with the longitudinal undercut of the elongated element 6.

In a further embodiment that is not illustrated, the support means 5, 6 can comprise, in particular, a plate in a single piece.

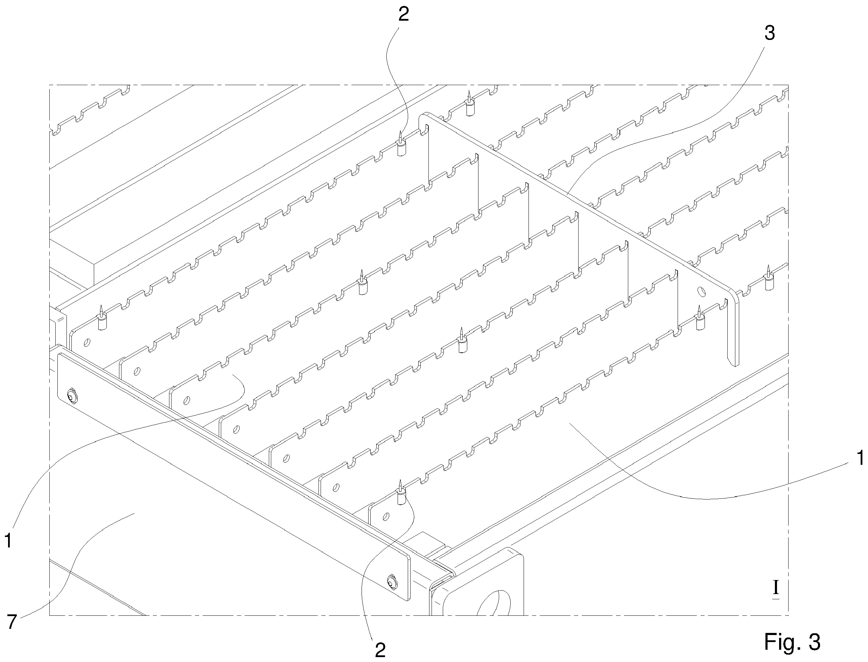

With reference to figures 3, 4, 4a, 5 and 6, the workbench 10 comprises, in particular fixing means 2 for fixing the support means 5, 6 to the plate-like elements 1. This fixing means 2 is arranged at least on one plate-like element 1. In the specific embodiment of figure 3, the fixing means is arranged appropriately on several plate-like elements 1.

The fixing means 2 comprises, in particular, a pointed element 2b that penetrates at least one part of a thickness of the support means 5, 6 so as to prevent a horizontal movement thereof. The pointed element 2b can comprise, in particular, a needle or a pin provided with a sharpened upper end. This pointed element 2b can be in particular a material that is able to traverse the support means, in particular a metal material.

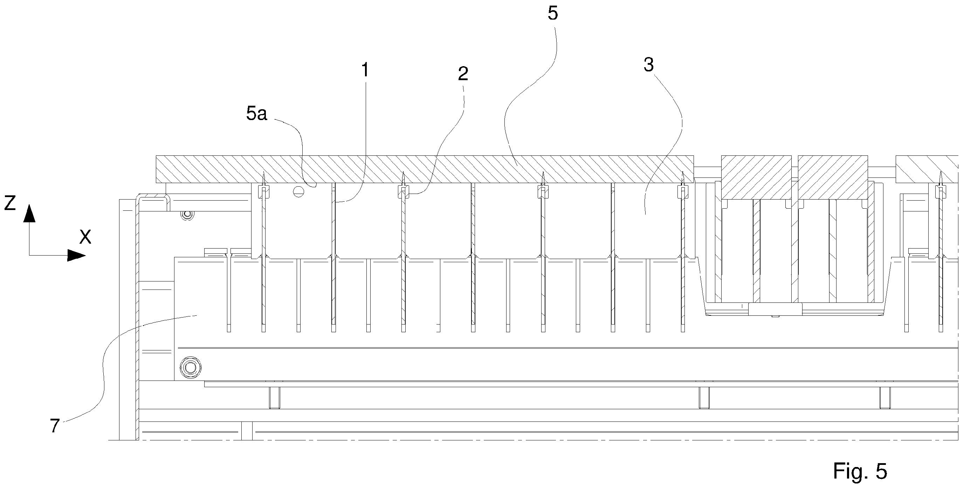

In the specific embodiment shown in figure 5, the pointed element 2b penetrates at least one part of the thickness of the plate support 5.

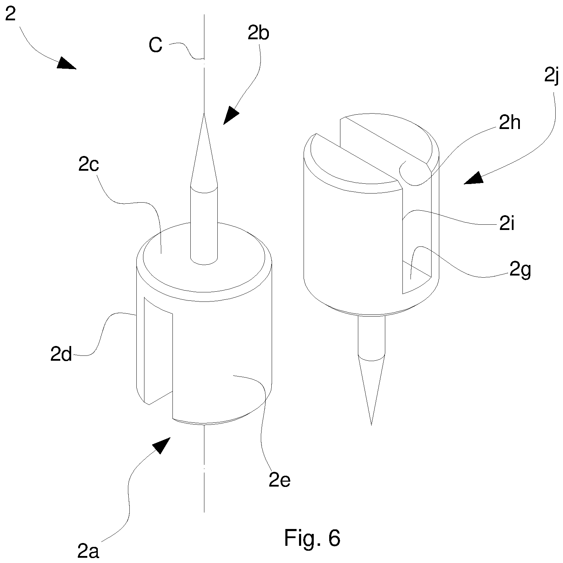

The base body 2a comprises, in particular, an upper surface 2c facing the support means 5, 6. From this upper surface 2c projects vertically the pointed element 2b along a main axis C of the fixing means 2. With reference to figure 6, this upper surface 2c can be circular and flat. In a further embodiment that is not shown the upper surface can be of other shapes, in particular can be of rectangular shape.

Referring in particular to figure 5, the upper end of the pointed body 2b is arranged at a vertical height that is greater than a vertical height of the abutment surface 1c, such that the pointed element penetrates the support means 5 to lock a displacement thereof. The abutment surface 1c of the plate-like element 1 is in contact with the support means 5 and the upper surface 2c does not interfere with the support means 5, as the upper surface 2c is arranged at a lesser vertical height than the vertical height of the abutment surface 1c.

In a further embodiment that is not shown, the contact surface 2c is arranged at a vertical height that is greater than or the same as the position of the abutment surface 2c such that the latter contacts the support means 5.

With reference to figure 6, the connecting means 2 comprises, in particular, a base body 2a that extends along the main axis C, the base body 2a is provided with at least one fork-shaped end engaging the recess 1b of the plate-like element 1. This end of the base body 2a can comprise, in particular, a first side portion 2d provided with a first side wall 2h and a second side portion 2e provided with a second side wall 2i, opposite the first side wall 2h. The side walls 2h, 2i both face the main axis C and bound a seat 2j arranged to couple with the jagged upper edge 1a, 1b, 1c. The distance with the side walls 2g, 2h is not greater than a transverse thickness of the jagged upper edge 1a, 1b, 1c, the thickness of the jagged upper edge 1a, 1b, 1c and the distance with the side walls 2g, 2h being measured along a horizontal axis transverse to the horizontal longitudinal axis. The transverse thickness of the jagged upper edge 1a, 1b, 1c is thus contained in the seat 2j, preventing a movement of the fixing means 2 along the transverse horizontal axis.

The base body 2a comprises, in particular, a cylinder body having a diameter that is no greater than a horizontal dimension of the recess 1b, the diameter and the horizontal dimension being measured along the horizontal longitudinal axis. The diameter of the cylinder body is thus contained in the recess 1b, preventing a movement of the fixing means along the horizontal longitudinal axis.

With reference to figures 3, 4, 4a and 8, the base 7 of the workbench 10 can comprise, in particular, two or more further plate-like elements, or comb elements 3, that are arranged vertically on the base 7 and transversely to the plate-like elements 1, so as to make a crossed grid configuration.

With reference particularly to figure 3, each plate-like element 1 is shaped in particular as a plate or lamina, has an elongated plan shape, in particular rectangular shape, rises vertically in height according to a direction that is parallel to the vertical axis Z, extends in length along a further horizontal longitudinal axis and has a transverse thickness that is significantly less than the length and the height. In the specific embodiment shown for example in figure 3, this further horizontal longitudinal axis is parallel to the horizontal axis X of the machining apparatus 100.

The further plate-like element 3 comprises, in particular, an upper edge portion 3c arranged to contact the side face 5c of the support means 5, in particular of the plate supports 5, so as to prevent a movement of the support means 5 along the horizontal longitudinal axis (figure 4).

The upper edge portion 3c protrudes vertically with respect to the abutment surface 1c, i.e. a vertical height of the edge portion 3c is greater than the vertical height of the abutment surface 1c, such that the upper edge portion 3c contacts the side face 5c laterally.

Each further plate-like element 3 comprises, in particular, two or more further recesses, or further undercuts 3b which are arranged spaced apart from one another by a set distance along the further longitudinal axis. With reference to figure 4, each further recess 3b is arranged to engage transversely in a removable manner the plate-like element 1. The further plate-like element 3 can be inserted vertically from above between the plate-like elements 1 such that each further recess 3b engages transversely the plate-like elements 1.

In the specific embodiment shown in the figures 2, 3, 4, 4a and 5, the further plate-like elements 3 are arranged parallel to the horizontal transverse axis of the plate-like element 1.

As can be seen from what has been disclosed above, the machining apparatus according to the present invention enables the limits and drawbacks of the prior art to be overcome to reach successfully the set objectives.

Owing to the invention, it is possible to fix precisely the support means that define the martyr plane with respect to the base of the workbench, so as to maintain the article to be machined in a set position and perform machining without waste.

Owing to the invention, it is possible to provide support means that is easily mountable and demountable so as to optimize the replacement time of the support means and increase the performance of the machining apparatus.

The apparatus according to the invention is particularly useful for preventing an undesired horizontal displacement of the support means and of the article to be machined, with respect in particular to the machining device.

## Claims

1. Machining apparatus (100), comprising:
- a workbench (10) to support at least one article to be processed;
- at least one machining device (4) to perform machining on said article by removing material, said machining device (4) being movable with respect to said workbench (10);
wherein said workbench (10) comprises:
- a base (7) comprising two or more plate-like elements (1) arranged vertically and spaced apart to each other, each plate-like element (1) being extended in length along a horizontal longitudinal axis and including a jagged upper edge (1a, 1b, 1c), i.e. comprising a succession of projections (1a) and recesses (1b);
- support means (5, 6) arranged on said base (7) in contact with said jagged upper edges (1a, 1b, 1c) of said plate-like elements (1), said support means (5, 6) being sacrificial, i.e. configured to undergo material removal together with said article, defining a support horizontal martyr plane for said article.

2. Apparatus according to claim 1, wherein said upper edge (1a, 1b, 1c) comprises an abutment surface (1c) in contact with said support means (5, 6), the apparatus comprising fixing means (2) arranged on at least one of said plate-like elements (1) for fixing said support means (5, 6).

3. Apparatus according to claim 2, wherein said fixing means (2) comprises an upper surface (2c) facing said support means (5), a vertical height of said upper surface (2c) being less than or equal to a vertical height of said abutment surface (1c) so that said upper surface (2c) does not interfere with said support means (5).

4. Apparatus according to any one of the preceding claims, comprising at least one pointed element (2b) which is disposed on at least one of said plate-like elements (1) and which penetrates at least a part of a thickness of said support means (5) to prevent horizontal movement thereof.

5. Apparatus according to claim 4, wherein said support means (5, 6) comprises at least one plate support (5) and said pointed element (2b) penetrates at least a part of a thickness of said plate support (5).

6. Apparatus according to claim 4 or 5, wherein each upper edge (1a, 1b, 1c) comprises two or more recesses (1b) and wherein said apparatus comprises at least one base body (2a) provided with at least one end, in particular fork-shaped end, engaged with at least one of said recesses (1b), wherein said base body (2a) comprises an upper surface (2c) which faces said support means (5) and from which said pointed element (2b) protrudes vertically.

7. Apparatus according to claim 6, wherein said upper edge (1a, 1b, 1c) comprises an abutment surface (1c) in contact with said support means (5), wherein a vertical height of said upper surface (2c) is less than or equal to a vertical height of said abutment surface (1c) so that said upper surface (2c) does not interfere with said support means (5).

8. Apparatus according to claim 7, wherein an upper end of said pointed element (2b) is arranged at a vertical height greater than a vertical height of said abutment surface (1c) so that said pointed element (2b) penetrates said support means (5).

9. Apparatus according to any one of claims 6 to 8, wherein said base body (2a) comprises a cylinder body with a diameter not greater than a horizontal dimension of said recess (1b), said diameter and said horizontal dimension being measured along said horizontal longitudinal axis, whereby said cylinder body is coupled with said recess (1b) preventing a movement of said fixing means (2) along said horizontal longitudinal axis.

10. Apparatus according to any one of claims 6 to 9, wherein said base body (2a) comprises a seat (2j) delimited by opposite side walls (2g, 2h), a distance between said side walls (2g, 2h) being less than, or equal to, a transverse thickness of said upper edge (1a, 1b, 1c), said distance and said transverse thickness being measured along a horizontal axis transverse to said horizontal longitudinal axis so that said seat (2j) is coupled with said upper edge (1a, 1b, 1c) preventing a movement of said fixing means (2) along said horizontal transverse axis.

11. Apparatus according to any one of the preceding claims, wherein said base (7) comprises two or more further plate-like elements (3) arranged transversely with respect to said plate-like elements (1), each further plate-like element (3) being extended in length along a further horizontal longitudinal axis.

12. Apparatus according to claim 11, wherein each of said further plate-like elements (3) comprises an upper edge portion (3c) arranged to contact a side face (5c) of said support means (5) so as to prevent a horizontal movement of said support means (5) along said horizontal longitudinal axis.

13. Apparatus according to claim 12, wherein said upper edge (1a, 1b, 1c) comprises an abutment surface (1c) in contact with said support means (5), wherein a vertical height of said upper edge portion (3c) is greater than a vertical height of said abutment surface (1c) so that said upper edge portion (3c) protrudes vertically with respect to said abutment surface (1c) to contact said side face (5c).

14. Apparatus according to any one of claims 11 to 13, wherein each further plate-like element (3) comprises two or more further recesses (3b) spaced apart by a preset distance along said further horizontal longitudinal axis, each further recess (3b) being arranged to engage transversely in a removable way with said upper edge (1a, 1b, 1c), said plate-like elements (1) and further plate-like elements (3) forming a crossed grid configuration.

15. Apparatus according to claim 1, wherein said support means (5, 6) comprises an elongated support (6) extending along a main axis (S) thereof with an open hollow section, said elongated support (6) comprising a longitudinal groove arranged to removably couple with said upper edge (1a, 1b, 1c) to fix a horizontal displacement of said elongated support (6).
